(19) Europäisches Patentamt
European Patent Office
Office européen des brevets

(11) **EP 4 610 977 A1**

(12) **EUROPEAN PATENT APPLICATION**

(43) Date of publication:
**03.09.2025 Bulletin 2025/36**

(21) Application number: **25160410.4**

(22) Date of filing: **26.02.2025**

(51) International Patent Classification (IPC):
***G10K 11/178*** (2006.01)

(52) Cooperative Patent Classification (CPC):
**G10K 11/17883; G10K 11/17821; G10K 11/17853;**
G10K 2210/12821

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024 CN 202410234954**

(71) Applicant: **BYD Company Limited**
**Shenzhen, Guangdong 518118 (CN)**

(72) Inventors:
• **SUN, Yaxuan**
**Shenzhen, 518118 (CN)**

• **WU, Yang**
**Shenzhen, 518118 (CN)**
• **ZHAO, Yongji**
**Shenzhen, 518118 (CN)**
• **XIONG, Weixing**
**Shenzhen, 518118 (CN)**
• **WANG, Jianrong**
**Shenzhen, 518118 (CN)**

(74) Representative: **Mathys & Squire**
**The Shard**
**32 London Bridge Street**
**London SE1 9SG (GB)**

(54) **VEHICLE NOISE REDUCTION METHOD, APPARATUS, AND SYSTEM, DEVICE, MEDIUM, AND VEHICLE**

(57) The present disclosure provides a vehicle noise reduction method, apparatus, and system, a device, a medium, and a vehicle. The method includes: a target vibration signal corresponding to a traveling speed is determined based on the traveling speed of a vehicle, the target vibration signal being adapted for enabling a speaker to sound to reduce noise. The present disclosure may determine, based on a current traveling speed of the vehicle, a target vibration signal corresponding to the traveling speed, so that a vehicle noise reduction control system may reduce noise based on a corresponding target vibration signal at different traveling speeds of the vehicle, thereby improving accuracy of noise reduction of the vehicle.

FIG. 4

EP 4 610 977 A1

# Description

## FIELD

The present disclosure relates to the field of vehicle technologies, and in particular, to a vehicle noise reduction method, apparatus, and system, an electronic device, a computer-readable storage medium, and a vehicle.

## BACKGROUND

During driving, a vehicle generates noise, which disturbs passengers inside the vehicle. The vehicle is equipped with a road noise cancellation (RNC) system, configured to reduce low-frequency road noise inside the vehicle. This system needs to perform calculations based on vibration signals, and control a speaker to make sounds based on a calculation result to cancel noise inside the vehicle.

At present, during driving of the vehicle, the road noise cancellation system reduces noise based on preselected vibration signals. However, in current solutions, when noise is reduced based on these selected vibration signals, the accuracy of the noise reduction is poor.

## SUMMARY

Examples of the present disclosure provide a vehicle noise reduction method, apparatus, and system, an electronic device, a readable storage medium, and a vehicle, to resolve a problem in the related art that accuracy of noise reduction is poor.

According to a first aspect, an example of the present disclosure provides a vehicle noise reduction method, including:

a traveling speed of a vehicle is determined based on a target vibration signal corresponding to the traveling speed,

the target vibration signal being adapted for enabling a speaker to sound to reduce noise.

Optionally, the step of determining, based on the traveling speed of the vehicle, the target vibration signal corresponding to the traveling speed includes:

a plurality of vibration signals and a plurality of sound signals corresponding to the traveling speed are determined based on the traveling speed of the vehicle; and

a target vibration signal corresponding to the traveling speed is selected, based on coherence results between the plurality of sound signals and the plurality of vibration signals, from the plurality of vibration signals, the coherence result representing a correlation between the vibration signal and the sound signal.

Optionally, the step of selecting, based on coherence results between the plurality of sound signals and the plurality of vibration signals, the target vibration signal from the plurality of vibration signals includes:

a preset quantity of coherence results is selected, based on the plurality of coherence results between the plurality of sound signals and the plurality of vibration signals, from the plurality of coherence results; and

a vibration signal corresponding to the preset quantity of coherence results is selected from the plurality of vibration signals as the target vibration signal.

Optionally, the step of selecting, based on a plurality of coherence results between the plurality of sound signals and the plurality of vibration signals, the preset quantity of coherence results from the plurality of coherence results includes:

the plurality of coherence results are sorted in a preset order based on magnitudes of the plurality of coherence results to acquire a coherence result sequence; and

the preset quantity of coherence results is selected based on the coherence result sequence.

Optionally, before the step of selecting, based on coherence results between the plurality of sound signals and the plurality of vibration signals, a target vibration signal from the plurality of vibration signals, the method further includes:

a group of coherence results corresponding to the vibration signal are obtained based on an autopower spectrum of the vibration signal, autopower spectrums corresponding to the plurality of sound signals, and a cross power spectrum between the vibration signal and each sound signal; and

a corresponding plurality of groups of coherence results are acquired based on the plurality of vibration signals.

Optionally, the step of determining, based on the traveling speed of the vehicle, the target vibration signal corresponding to the traveling speed includes:
the target vibration signal corresponding to the traveling speed is determined based on the traveling speed of the vehicle and a preset relationship, the preset relationship being a correspondence between the traveling speed and a vibration signal.

Optionally, determining the target vibration signal corresponding to the traveling speed based on the traveling speed of the vehicle and the preset relationship further includes:

a preset relationship corresponding to a speed interval that the traveling speed of the vehicle falls in is determined based on the traveling speed of the vehicle; and

the target vibration signal is determined based on the traveling speed of the vehicle and the preset relationship.

Optionally, the step of determining, based on the traveling speed of the vehicle, the target vibration signal corresponding to the traveling speed includes:

a target vibration sensor corresponding to the traveling speed is determined based on the traveling speed of the vehicle; and
a vibration signal outputted by the target vibration sensor is used as the target vibration signal.

Optionally, the step of determining, based on the traveling speed of the vehicle, the target vibration sensor corresponding to the traveling speed includes:

the speed range is determined based on the traveling speed of the vehicle; and
the target vibration sensor is determined based on the speed range.

Optionally, after the step of determining, based on the traveling speed of the vehicle, the target vibration signal corresponding to the traveling speed, the method further includes:
a noise reduction control signal is determined based on the target vibration signal, the noise reduction control signal being configured for controlling the speaker to sound to reduce noise.

Optionally, after the step of determining the noise reduction control signal based on the target vibration signal, the method further includes:

noise in the vehicle is determined; and
in a case that the noise in the vehicle is greater than a preset sound threshold, a quantity of the target vibration signals is increased until the noise in the vehicle is less than or equal to the preset sound threshold.

According to a second aspect, an example of the present disclosure provides a vehicle noise reduction apparatus. The vehicle noise reduction apparatus is configured to determine, based on a traveling speed of a vehicle, a target vibration signal corresponding to the traveling speed, the target vibration signal being adapted for enabling a speaker to sound to reduce noise.

Optionally, the vehicle noise reduction apparatus is configured to determine, based on a traveling speed of a vehicle, a target vibration signal corresponding to the traveling speed,
the target vibration signal being adapted for enabling a speaker to sound to reduce noise.

Optionally, the vehicle noise reduction apparatus is configured to: determine, based on the traveling speed of the vehicle, a plurality of vibration signals and a plurality of sound signals corresponding to the traveling speed; and

select, based on coherence results between the plurality of sound signals and the plurality of vibration signals, a target vibration signal corresponding to the traveling speed from the plurality of vibration signals, the coherence result representing a correlation between the vibration signal and the sound signal.

Optionally, the vehicle noise reduction apparatus is configured to: select, based on a plurality of coherence results between the plurality of sound signals and the plurality of vibration signals, a preset quantity of coherence results from the plurality of coherence results; and

select a vibration signals corresponding to the preset quantity of coherence results from the plurality of vibration signals as the target vibration signal.

Optionally, the vehicle noise reduction apparatus is configured to: sort the plurality of coherence results in a preset order based on magnitudes of the plurality of coherence results to acquire a coherence result sequence; and

select the preset quantity of coherence results based on the coherence result sequence.

Optionally, the vehicle noise reduction apparatus is configured to: obtain a group of coherence results corresponding to the vibration signal based on an autopower spectrum of the vibration signal, autopower spectrums corresponding to the plurality of sound signals, and a cross power spectrum between the vibration signal and each sound signal; and

acquire a corresponding plurality of groups of coherence results based on the plurality of vibration signals.

Optionally, the vehicle noise reduction apparatus is configured to determine the target vibration signal corresponding to the traveling speed based on the traveling speed of the vehicle and a preset relationship, the preset relationship being a correspondence between the traveling speed and a vibration signal.

Optionally, the vehicle noise reduction apparatus is configured to: determine, based on the traveling speed of the vehicle, a preset relationship corresponding to a speed range that the traveling speed of the vehicle falls in; and

determine the target vibration signal based on the traveling speed of the vehicle and the preset relationship.

Optionally, the vehicle noise reduction apparatus is configured to: determine, based on the traveling speed of the vehicle, a target vibration sensor corresponding to the traveling speed; and

use a vibration signal outputted by the target vibration sensor as the target vibration signal.

Optionally, the vehicle noise reduction apparatus is configured to: determine the speed range based on the traveling speed of the vehicle; and

determine the target vibration sensor based on the speed range.

Optionally, the vehicle noise reduction apparatus is configured to determine a noise reduction control signal based on the target vibration signal, the noise reduction control signal being configured for controlling the speaker to sound to reduce noise.

Optionally, the vehicle noise reduction apparatus is configured to: determine noise in the vehicle; and increase, in a case that the noise in the vehicle is greater than a preset sound threshold, a quantity of the target vibration signals until the noise in the vehicle is less than or equal to the preset sound threshold.

According to a third aspect, an example of the present disclosure provides a vehicle noise reduction system. The system includes:

the vehicle noise reduction apparatus according to the second aspect and a speaker.

The vehicle noise reduction apparatus acquires a noise reduction control signal based on a target vibration signal, and transmits the noise reduction control signal to the speaker; and

the speaker receives the noise reduction control signal to reduce noise.

According to a fourth aspect, an example of the present disclosure provides an electron device, including: a processor and a memory,

the memory being configured to store a computer program; and
a processor being configured to implement, when executing the program stored in the memory, steps of the vehicle noise reduction method as described in the foregoing first aspect.

According to a fifth aspect, an example of the present disclosure provides a computer-readable storage medium, storing a computer program, the program, when executed by a processor, implements the steps of the vehicle noise reduction method as described in the foregoing first aspect.

According to a sixth aspect, an example of the present disclosure provides a vehicle, including the vehicle noise reduction apparatus as described in the second aspect, and/or the vehicle noise reduction system as described in the third aspect, and/or the electronic device as described in the fourth aspect.

For the related art, the present disclosure has the following advantages:

In this example of the present disclosure, the target vibration signal corresponding to the traveling speed is determined based on the traveling speed of the vehicle, so that the speaker may be controlled to sound based on the target vibration signal to reduce noise. According to the present disclosure, the target vibration signal corresponding to the traveling speed may be determined based on a current traveling speed of the vehicle, so that noise may be reduced based on corresponding target vibration signals at different traveling speeds of the vehicle, thereby improving accuracy of noise reduction of the vehicle.

The foregoing description is merely an overview of the technical solutions of the present disclosure. To understand the technical solutions of the present disclosure more clearly, implementation can be performed based on content of the specification. Moreover, to make the foregoing description and other objectives, features, and advantages of the present disclosure more comprehensible, specific implementations of the present disclosure are described below.

## BRIEF DESCRIPTION OF THE DRAWINGS

To describe the technical solutions of the examples of the present disclosure or in the related art more clearly, the following briefly introduces the accompanying drawings required for describing the examples.

FIG. 1 is a schematic diagram of steps of a vehicle noise reduction method according to an example of the present disclosure;
FIG. 2 is a schematic diagram of steps of another vehicle noise reduction method according to an example of the present disclosure;
FIG. 3 is a schematic diagram of a noise frequency band according to an example of the present disclosure;
FIG. 4 is a schematic diagram of an interface for setting a sensor according to an example of the present disclosure;
FIG. 5 is a schematic flowchart of acquiring a vibration signal in a speed range according to an example of the present disclosure;
FIG. 6 is a schematic diagram of determining a target vibration signal based on a current speed according to an example of the present disclosure;
FIG. 7 is a schematic structural diagram of reducing noise and adjustment based on a current speed according to an example of the present disclosure;
FIG. 8 is a schematic structural diagram of a vehicle noise reduction system according to an example of the present disclosure; and
FIG. 9 is a block diagram of an electronic device according to an example of the present disclosure.

## DETAILED DESCRIPTION

The following describes in detail exemplary examples of the present disclosure with reference to the accompanying drawings. Although exemplary examples of the present disclosure are shown in the accompanying drawings, it should be understood that, the present disclosure may also be implemented in various forms and should not be limited to the examples described herein. In other words, these examples are provided to enable a more thorough understanding of the present disclosure, and to fully convey the scope of the present disclosure to a person skilled in the art.

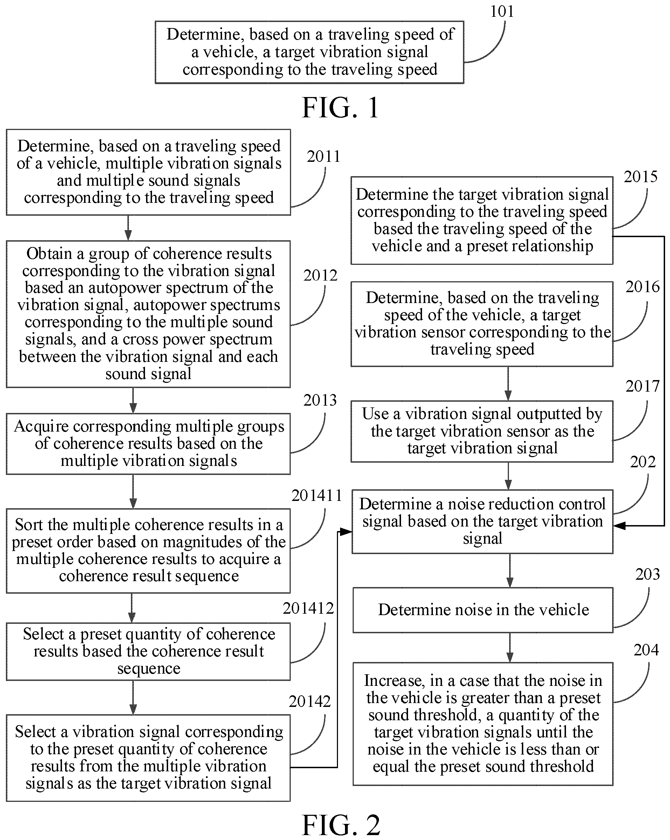

FIG. 1 is a diagram of steps of a vehicle noise reduction method according to an example of the present disclosure. The method includes the following steps:

Step 101: A target vibration signal corresponding to a traveling speed is determined based on the traveling speed of a vehicle.

In this example of the present disclosure, during traveling of the vehicle, a current speed of the vehicle may be acquired through a speed sensor of the vehicle. It may be understood that, during traveling, the traveling speed of the vehicle may change at any time. For example, a speed of the vehicle may be increased from 30 kilometers per hour to 50 kilometers per hour.

The vibration signal may be considered as a vibration signal that may represent vibration situations of the vehicle, and these vibration situations of the vehicle cause noise. The target vibration signal corresponding to the traveling speed of the vehicle represents that, when the vehicle travels at a current traveling speed, the target vibration signal has a high correlation with the noise generated by the vehicle at the current traveling speed. The target vibration signal may be a target vibration signal group formed by a plurality of vibration signals.

In this example of the present disclosure, a vehicle noise reduction control system may perform noise reduction calculation through the vibration signal, and control, based on a calculation result, a speaker to sound, to reduce noise in the vehicle. The vehicle noise reduction control system performs calculation based on the target vibration signal by using a predetermined noise reduction algorithm, and controls, based on a calculation result, the speaker to sound, to reduce noise in the vehicle.

In summary, in this example of the present disclosure, the target vibration signal corresponding to the traveling speed is determined based on the traveling speed of the vehicle. so that the speaker may be controlled to sound based on the target vibration signal to reduce noise. The present disclosure may determine, based on a current traveling speed of the vehicle, a target vibration signal corresponding to the traveling speed, so that noise may be reduced based on the corresponding target vibration signal at different traveling speeds of the vehicle, thereby improving accuracy of noise reduction of the vehicle.

A process of the vehicle noise reduction method in the examples of the present disclosure is described below by a specific implementation procedure. FIG. 2 is a diagram of steps of another vehicle noise reduction method according to an example of the present disclosure. As shown in FIG. 2, the method includes the following steps:

Step 201: A target vibration signal corresponding to a traveling speed is determined based on the traveling speed of a vehicle.

For the foregoing step 201, refer to content in the example of FIG. 1. Details are not described herein again.

Optionally, step 201 may include sub-step 2011 and sub-step 2014.

Sub-step 2011: A plurality of vibration signals and a plurality of sound signals corresponding to the traveling speed are determined based on the traveling speed of the vehicle.

Sub-step 2014: The target vibration signal corresponding to the traveling speed is selected, based on coherence results between the plurality of sound signals and the plurality of vibration signals, from the plurality of vibration signals, the coherence result representing a correlation between the vibration signal and the sound signal.

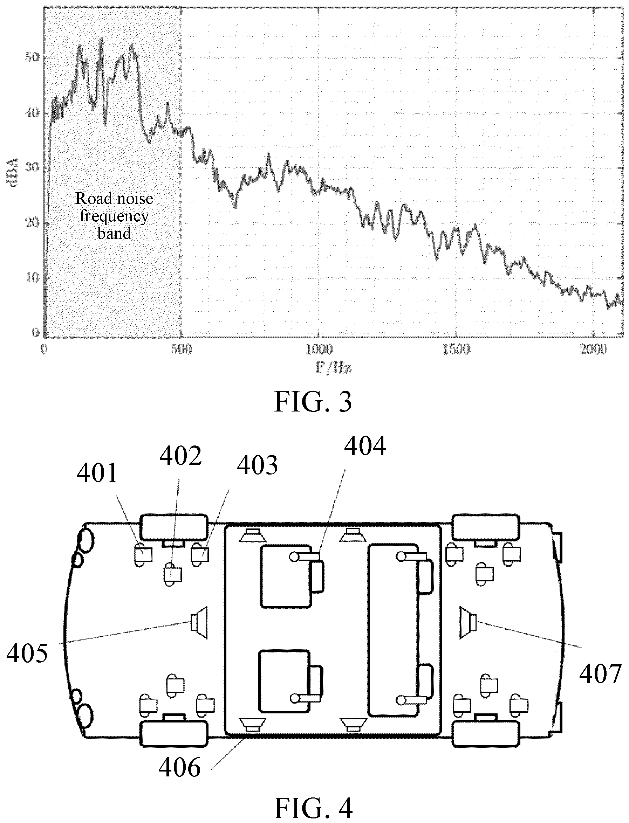

In the examples of the present disclosure, the noise in the vehicle, such as road noise, may be acquired through the sound sensor of the vehicle, to obtain a power spectrum of the noise, and a main frequency band of the road noise is calibrated. At present, main acoustic energy of the noise is concentrated below 500 Hz. FIG. 3 is a frequency band diagram of road noise. As shown in FIG. 3, in a range from 0 Hz to 500 Hz on the abscissa, noise is large. In this case, the frequency band may be marked as a main frequency band of the road noise. In the main frequency band of the road noise, a vibration signal and a sound signal are acquired, to calculate the coherence.

At the current traveling speed of the vehicle, a plurality of vibration signals and a plurality of sound signals corresponding to the traveling speed are determined through multiple acceleration sensors and multiple sound sensors of the vehicle. The acceleration sensors may be arranged on both sides of suspension with a wheel core as an axis of symmetry, and a beam connected to a vehicle body. It may be understood that, one acceleration sensor may acquire three vibration signals, namely acceleration in a front-rear direction of the vehicle, acceleration in a left-right direction of the vehicle, and acceleration in an up-down direction of the vehicle, that is, one acceleration sensor may actually acquire the three vibration signals.

As shown in FIG. 4, an acceleration sensor 401, an acceleration sensor 402, and an acceleration sensor 403 are arranged near axles of the vehicle. Three sensors may be arranged near each axle. A sound sensor 404 may be arranged at a position of a seat headrest of the vehicle, so that sound acquired by the sound sensor 404 is similar to sound acquired by a human ear. Sound sensors may be arranged on all four seats in the figure. A speaker 405, a speaker 406, and a speaker 407 may be arranged around a seat of the vehicle. As shown in FIG. 4, a total of 6 speakers may be included.

The target vibration signal is selected from the plurality of vibration signals based on the coherence results between the plurality of sound signals and the plurality of vibration signals. The coherence result may be calculated through a preset coherence calculation formula, and each coherence result may represent a correlation between one vibration signal and one sound signal.

Optionally, sub-step 2014 includes step 20141 and step 20142.

Step 20141: A preset quantity of coherence results is selected, based on a plurality of coherence results between the plurality of sound signals and the plurality of vibration signals, from the plurality of coherence results.

Step 20142: A vibration signal corresponding to the preset quantity of coherence results is selected from the plurality of vibration signals as the target vibration signal.

In the examples of the present disclosure, based on the plurality of coherence results between the plurality of sound signals and the plurality of vibration signals, the preset quantity of coherence results is selected from the plurality of coherence results. A value of the preset quantity may be a value such as 3 or 5. Since each coherence result represents coherence of one vibration signal and one sound signal, after the preset quantity of coherence results is determined, vibration signals corresponding to the coherence results are determined based on the preset quantity of coherence results, and the vibration signals corresponding to the coherence results are used as the target vibration signals.

Optionally, step 20141 may include step 201411 and step 201412.

Step 201411: The plurality of coherence results are sorted in a preset order based on magnitudes of the plurality of coherence results to acquire a coherence result sequence.

Step 201412: The preset quantity of coherence results is selected based on the coherence result sequence.

In the examples of the present disclosure, the plurality of coherence results may be sorted in the preset order based on the magnitudes of the plurality of coherence results, for example, sorted in descending order to acquire the coherence result sequence. Then, a preset quantity of coherence results ranking first is selected from the coherence result sequence. It may be understood that, the plurality of coherence results may alternatively be sorted in ascending order based on the magnitudes of the plurality of coherence results to acquire the coherence result sequence. Then, a preset quantity of coherence results ranking last is selected from the coherence result sequence.

Optionally, before sub-step 2014, sub-step 2012 and sub-step 2013 are further included.

Sub-step 2012: A group of coherence results corresponding to the vibration signal are obtained based on an autopower spectrum of the vibration signal, autopower spectrums corresponding to the plurality of sound signals, and a cross power spectrum between the vibration signal and each sound signal.

Sub-step 2013: A corresponding plurality of groups of coherence results are acquired based on the plurality of vibration signals.

In the examples of the present disclosure, based on the plurality of vibration signals and the plurality of sound signals, a process of calculating the plurality of coherence results may be: performing coherence calculation on each vibration signal in the plurality of vibration signals with each sound signal in the plurality of sound signals, to obtain a group of coherence results corresponding to one vibration signal. A coherence result of the vibration signal may be calculated based on the autopower spectrum of the vibration signal, the autopower spectrum of the sound signal, and the cross power spectrum between the vibration signal and the sound signal. It may be understood that, a quantity of coherence results included in the group of coherence results corresponding to one vibration signal is consistent with a quantity of sound signals.

For example, if the plurality of vibration signals include a vibration signal A, a vibration signal B, and a vibration signal C, and the plurality of sound signals include a sound signal D, a sound signal E, and a sound signal F, coherence calculation is respectively performed on the vibration signal A and the sound signal D, and the sound signal E, and the sound signal F, to obtain three coherence calculation results, that is, a group of coherence results corresponding to the vibration signal A; coherence calculation is performed on the vibration signal B and the sound signal D, and the sound signal E and the sound signal F, to obtain three coherence calculation results; and coherence calculation is performed on the vibration signal C and the sound signal D, and the sound signal E and the sound signal F, to obtain three coherence calculation results. A total of nine coherence results are obtained. The coherence result may be calculated by using the following formula:

$$\gamma_{x_j y_k}(f)^2 = \frac{\left|S_{x_j y_k}(f)\right|^2}{S_{x_j x_j}(f) S_{y_k y_k}(f)}$$

where $\gamma_{x_j y_k}(f)^2$ represents a coherence result between a vibration signal and a sound signal; $S_{x_j y_k}(f)$ is a cross power spectrum between a vibration signal acquired by a corresponding acceleration sensor and a sound signal acquired by a sound sensor; $S_{x_j x_j}(f)$ is an autopower spectrum of a vibration signal; and $S_{y_k y_k}(f)$ is an autopower spectrum of a sound signal.

The power spectrum represents a relationship between a frequency and energy of each harmonic component in a signal, and may be configured for analyzing a frequency component and a structural relationship of the signal, and energy magnitudes of the frequency components. The cross power spectrum is also referred to as a mutual power spectrum, and may represent a correlation between two signals in time and frequency. The cross power spectrum may be obtained by performing Fourier transform on the two signals, multiplying frequency domain representations and taking an average.

Optionally, step 201 may include sub-step 2015.

Sub-step 2015: The target vibration signal corresponding to the traveling speed is determined based on the traveling speed of the vehicle and a preset relationship, the preset relationship being a correspondence between the traveling speed and a vibration signal.

In the examples of the present disclosure, the preset relationship may be prestored, and the preset relationship represents a correspondence between the traveling speed and the vibration signal. The target vibration signal corresponding to the traveling speed is determined based on the traveling speed and the preset relationship.

The preset relationship may be stored in a configuration file, for example, stored in the form of a data sheet. In addition, the vibration signal corresponding to the traveling speed in the preset relationship may be obtained by testing the vehicle before delivery, or may be obtained during actual use of the vehicle when a user is driving the vehicle. However, it may be understood that, both testing before delivery and actual driving of the vehicle by the user are driving processes of the vehicle. Therefore, there may be no difference in essence.

During traveling of the vehicle, the target vibration signal corresponding to each traveling speed may be obtained in a step similar to the foregoing step 2011, step 2012, step 2013, step 201411, step 201412, and step 20142. Details are not described herein again. When the vehicle is traveling at a speed, a vibration signal and a sound signal corresponding to the speed are acquired, and filtering is performed based on the coherence result. The preset quantity of target vibration signals is selected. Then, the speed and the target vibration signals obtained through filtering at the speed may be stored, to form a file or configuration storing a correspondence between the traveling speed and the vibration signal.

Optionally, step 2015 may further include: determining, based on the traveling speed of the vehicle, a preset relationship corresponding to a speed range that the traveling speed of the vehicle falls in; and

determining the target vibration signal based on the traveling speed of the vehicle and the preset relationship.

A speed range of the vehicle may be divided into multiple speed intervals based on a preset speed interval. A vibration signal corresponding to each speed interval is acquired. Then, in the vibration signal corresponding to each speed interval, the target vibration signal corresponding to each speed interval is selected based on the coherence result of the vibration signal and the sound signal.

The preset speed interval may be 10, 20, or the like. The speed interval refers to a difference between a minimum speed and a maximum speed within the interval. For example, the speed interval may be 10, the minimum speed of the speed interval may be 30 kilometers per hour, the maximum speed of the speed interval may be 40 kilometers per hour, and the difference between the minimum speed and the maximum speed is a size of the interval. The speed range of the vehicle may be a range set for reducing noise of the vehicle. For example, when the traveling speed of the vehicle is traveling in a speed range of 30 kilometers to 90 kilometers per hour, noise is most noticeable. In this case, the speed range of 30 kilometers to 90 kilometers per hour may be used as a range for dividing the speed interval. Data stored in an acceleration data table may be data that only stores vibration signals corresponding to the speed range of 30 kilometers to 90 kilometers per hour.

Multiple intervals may be obtained by dividing the speed range of the vehicle based on the preset speed interval. For example, the speed interval may be 10, and the speed range of the vehicle may be a speed range of 60 kilometers to 90 kilometers per hour. In this case, the divided speed intervals may be three intervals of 60 kilometers to 70 kilometers per hour, 70 kilometers to 80 kilometers per hour, and 80 kilometers to 90 kilometers per hour. Then, vibration signals corresponding to the three intervals are acquired.

At different speeds in the speed interval, a plurality of vibration signals are respectively acquired by multiple acceleration sensors of the vehicle, and a plurality of sound signals are respectively acquired by multiple sound sensors. Traveling at different speeds in the speed interval means controlling the vehicle to travel at different speeds in the speed interval. For example, the speed interval may be 60 kilometers to 70 kilometers per hour. In this case, different speeds in the speed interval refer to 60 kilometers per hour, 61 kilometers per hour, 62 kilometers per hour, ..., 70 kilometers per hour, or may refer to 60 kilometers per hour, 62 kilometers per hour, 64 kilometers per hour, ..., 70 kilometers per hour. In other words, a difference or an increment between adjacent different speeds may be 1, 2, or the like. This is not limited herein.

Vibration signals and sound signals at different speeds may be acquired when the vehicle travels at different speeds within a speed interval, and the vibration signals and sound signals at different speeds may be summarized to obtain all vibration signals and sound signals corresponding to the speed interval. Then, coherence results are acquired based on all the vibration signals and all the sound signals. Similarly, a specific quantity of correlation results may be selected from the plurality of coherence results based on the magnitude of the coherence, and corresponding target vibration signals are determined. These target vibration signals correspond to an entire speed range rather than a single traveling speed. In other words, although traveling speeds of the vehicle are different, the traveling speeds all fall within a speed interval, and target vibration signals corresponding to different traveling speeds are the same. Each speed interval is stored in correspondence with a corresponding vibration signal, to obtain the preset relationship between the speed interval and the vibration signal.

The plurality of coherence results corresponding to the speed interval may be represented by the following formula:

$$C_J = \sum_{i=1}^{10} \sum_{k=1}^{N} C_{ijk}$$

where $C_J$ is a plurality of coherence results corresponding to a speed interval, N is a quantity of sound sensors, j is a quantity of vibration signals, k is a quantity of sound signals, j is a quantity of vibration signals, and i represents an increment of a speed (if a speed interval is 10, i being 1 represents adding 1 to a minimum speed of the speed interval).

The preset quantity of coherence results is selected from the plurality of coherence results. The preset quantity may be 2, 3, or the like. When the preset quantity is selected, the calculated plurality of coherence results corresponding to different speeds in the speed interval may be sorted in magnitude, and the preset quantity of coherence results with top rank, that is, with higher coherence, is selected. Vibration signals for calculating the coherence results are determine based on the preset quantity of coherence results. The quantity of the vibration signals is also the preset quantity, and the preset quantity of vibration signals is used as a group of vibration signals of a currently tested speed interval.

The speed range of the vehicle is divided into multiple intervals, and each interval includes multiple different speeds. Provided that a current speed of the vehicle falls within a corresponding interval, noise generated by the vehicle traveling at the current speed may be reduced based on vibration signals in the interval, thereby reducing a data storage amount of the acceleration data sheet, reducing time for determining a corresponding vibration signal based on the current traveling speed of the vehicle, and improving noise reduction efficiency.

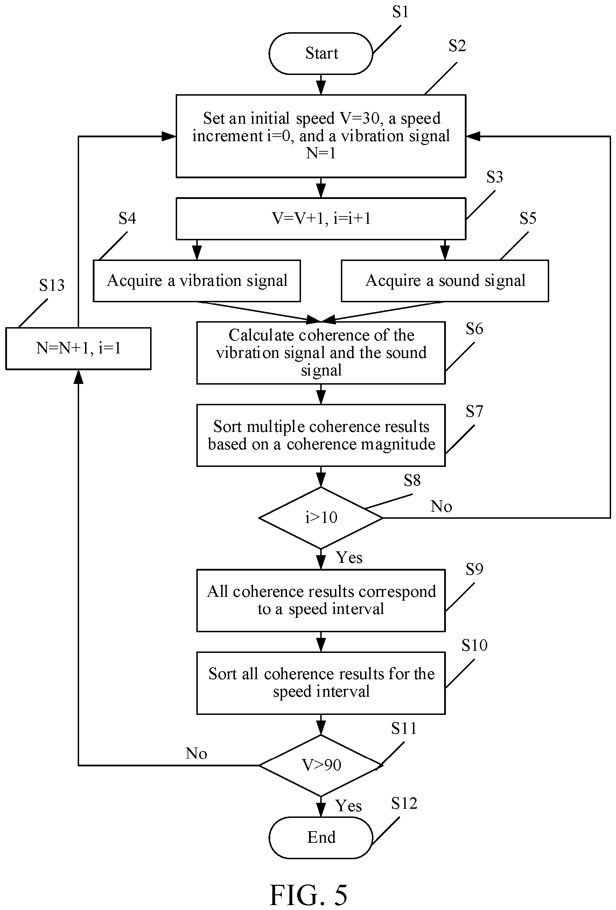

FIG. 5 represents a process in which a speed interval is set to 10, a difference or an increment between adjacent different speeds is 1, and a speed range is 30 kilometers per hour to 90 kilometers per hour, and then vibration signals of multiple speed intervals in this speed range are obtained. Step S1: Start. Step S2: An initial speed V is set to 30 and a speed increment i is set to 0, representing traveling at an initial speed, and a vibration signal N being 1 indicates starting to obtain a vibration signal of a first speed interval. Step S3: The increment is changed from 0 to 1, representing that an increment of 1 is added to the initial speed V, and the speed is changed to 31 kilometers per hour. Step S4: A vibration signal is acquired at a current speed. Step S5: A sound signal is acquired at the current speed. Step S6: Coherence of the vibration signal and the sound signal is calculated. Step S7: A plurality of coherence results are sorted. Step S8:

Whether an interval is exceeded is determined. Step S9: All coherence results corresponding to all different speeds are acquired if all speeds in the current speed interval have been traversed, otherwise an increment of 2 is continued to be added to the initial speed, and a signal is continued to be acquired in a case that the speed is 32. Step S10: All the coherence results of the speed interval are sorted, to acquire a target vibration signal corresponding to the speed interval from the sorting. Step S11: Whether the speed is greater than an upper limit of a speed range, namely, 90, is determined. Step S12: If the speed is greater than 90, the process ends. Step S12: If the speed is not greater than 90, a next speed interval is entered, and the foregoing steps are repeated.

For the multiple speed intervals divided based on the speed range of the vehicle, coherence results are calculated for different speeds in the intervals, and a preset quantity of target vibration signals, that is, a target vibration signal group, is selected for each speed interval.

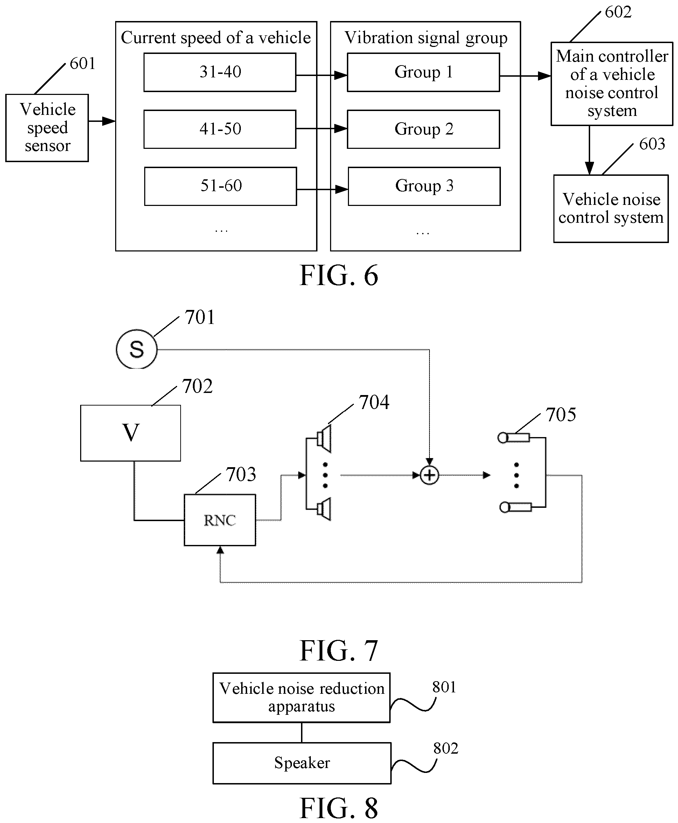

As shown in FIG. 6, a current speed of a vehicle is acquired and determined by using a vehicle speed sensor 601, and a corresponding vibration signal group, that is, a target vibration signal, is determined based on the current speed of the vehicle. The vibration signal group may be first inputted to a main controller 602 of a vehicle noise reduction system. The main controller 602 of the vehicle noise reduction system updates a parameter, and then the vibration signal group is inputted to a vehicle noise reduction system 603.

Optionally, step 201 may include sub-step 2016 and sub-step 2017.

Sub-step 2016: A target vibration sensor corresponding to a traveling speed is determined based on the traveling speed of a vehicle.

Sub-step 2017: A vibration signal outputted by the target vibration sensor is used as a target vibration signal.

In the examples of the present disclosure, based on the traveling speed of the vehicle, a corresponding target vibration sensor may be determined based on the traveling speed. Then, the vibration signal outputted by the target vibration sensor is used as the target vibration signal. It may be understood that, there may be multiple target vibration sensors, that is, a target vibration sensor group may be formed.

A process of determining the target vibration sensor corresponding to the traveling speed may be to collect the vibration signal and the sound signal at the traveling speed. Then, based on the coherence result of the vibration signal and the sound signal, a vibration signal with better coherence is selected from the collected vibration signals. For this process, reference may be made to the foregoing step examples. Details are not described herein again. After vibration signals with better coherence are determined, vibration sensors corresponding to the vibration signals with better coherence, that is, sources of the vibration signals with better coherence, are determined. The vibration sensor that generates the vibration signal with better coherence is used as the target vibration sensor, and then the vibration signal outputted by the target vibration sensor is used as the target vibration signal.

The correspondence is similar to the preset relationship between the traveling speed and the vibration signal. A target sensor at each traveling speed may be determined through the foregoing process through test before delivery or actual driving of the vehicle by the user, and a correspondence between each traveling speed and a corresponding target vibration sensor is stored. Subsequently, the target vibration sensor may be directly determined based on the traveling speed and the correspondence.

The examples of the present disclosure are implemented, the target vibration sensor corresponding to the traveling speed is determined based on the traveling speed of the vehicle. The vibration signal outputted by the target vibration sensor is used as the target vibration signal. Different target vibration sensors can be determined based on different speeds, to acquire a vibration signal of the target vibration sensor with better vehicle-noise coherence at the current traveling speed, which improves accuracy of noise reduction at different speeds, thereby improving stability of a noise reduction effect.

Optionally, step 2016 may include: determining the speed range based on the traveling speed of the vehicle; and

determining the target vibration sensor based on the speed interval.

In the examples of the present disclosure, reference may be made to the content of the speed interval in the foregoing step 2015, and the speed interval is determined based on the traveling speed of the vehicle. A preset correspondence between the speed interval and the target vibration sensor may be pre-established. Reference may be made to the foregoing process of determining the corresponding target vibration sensor for each traveling speed in step 2016 and step 2017. The target vibration sensors corresponding to each traveling speed in a speed interval are aggregated, and then a specific quantity of target vibration sensors that appear the most times may be selected as the target vibration sensors corresponding to the speed interval. For example, in a speed range from 30 kilometers per hour to 40 kilometers per hour, a vibration sensor A is a target vibration sensor corresponding to 7 speeds in the speed range, and a vibration sensor B is a target vibration sensor corresponding to 3 speeds in the speed range. In this case, the vibration sensor A may be used as the target vibration sensor in the speed range. There may be multiple target vibration sensors corresponding to the speed interval.

Based on a constructed preset correspondence between the speed interval and the target vibration sensor, the speed interval may be determined based on the traveling speed of the vehicle, and the target vibration sensor may be determined based on the speed interval.

Optionally, after step 201, step 202 is further included.

Step 202: A noise reduction control signal is determined based on the target vibration signal, the noise reduction control signal being for controlling a speaker to sound to reduce noise.

In the examples of the present disclosure, the vehicle noise reduction control system may perform calculation based on the target vibration signal by using a predetermined noise reduction algorithm, and control, based on a calculation result, the speaker to sound, to reduce noise in the vehicle.

Optionally, after step 202, step 203 and step 204 may be further included.

Step 203: Noise in the vehicle is determined.

Step 204: In a case that the noise in the vehicle is greater than a preset sound threshold, a quantity of the target vibration signals is increased until the noise in the vehicle is less than or equal to the preset sound threshold.

In the examples of the present disclosure, after the target vibration signal is determined and the target vibration signal is inputted to the vehicle noise reduction control system for noise reduction, the noise in the vehicle may be obtained by the sound sensor of the vehicle. The preset sound threshold is preset. When the noise in the vehicle after noise reduction is performed is still greater than the preset sound threshold, it may be considered that a noise reduction effect is poor. Since the target vibration signals selected before noise is reduced are the preset quantity of vibration signals, in a case that the noise in the vehicle is greater than the preset sound threshold, a quantity of target vibration signals is increased. For example, when selection is performed after the coherence results are sorted, five coherence results ranking first in the sorting are selected is a first time of noise reduction, that is, five target vibration signals are acquired. In this case, ten coherence results ranking first in the sorting are selected in a second time of noise reduction, that is, ten target vibration signals are acquired, and noise is reduced based on the ten target vibration signals. In addition, whether the noise of the vehicle is greater than the preset sound threshold continues to be detected. If the noise is greater than the preset sound threshold, more target vibration signals are continuously selected based on a similar manner until the noise of the vehicle is less than or equal to the preset sound threshold.

As shown in FIG. 7, a noise source 701 makes noise, a speed sensor 702 of a vehicle acquires a vehicle speed, a vehicle noise reduction control system 703 acquires a corresponding target vibration signal based on a current speed of the vehicle, to perform noise reduction calculation and control a speaker 704 to sound, and the sound of the speaker 704 is mixed with the noise to achieve a noise reduction effect. A sound sensor 705 continues to acquire remaining noise, and the vehicle noise reduction control system 703 continues to adjust the target vibration signal, thereby further reducing the noise.

In the examples of the present disclosure, after the step in which the vehicle noise reduction control system controls the speaker to sound, to reduce the noise of the vehicle, the noise in the vehicle is acquired through the sound sensor of the vehicle. In a case that the noise in the vehicle is greater than the preset sound threshold, the value of the preset quantity is increased to acquire more vibration signals until the noise in the vehicle is less than or equal to the preset sound threshold. More vibration signals can be acquired based on actual noise reduction, and in a case that the noise reduction effect is poor, the noise reduction effect can be improved, thereby improving the noise reduction effect.

In summary, in the examples of the present disclosure, the target vibration signal corresponding to the traveling speed is determined based on the traveling speed of the vehicle. In this way, the speaker may be controlled to sound based on the target vibration signal to reduce noise. The present disclosure may determine, based on a current traveling speed of the vehicle, a target vibration signal corresponding to the traveling speed, so that noise may be reduced based on the corresponding target vibration signal at different traveling speeds of the vehicle, thereby improving accuracy of noise reduction of the vehicle.

An example of the present disclosure provides a vehicle noise reduction apparatus. The vehicle noise reduction apparatus is configured to determine, based on a traveling speed of a vehicle, a target vibration signal corresponding to the traveling speed, the target vibration signal being adapted for enabling a speaker to sound to reduce noise.

Optionally, the vehicle noise reduction apparatus is configured to determine, based on a traveling speed of a vehicle, a target vibration signal corresponding to the traveling speed,
the target vibration signal being adapted for enabling a speaker to sound to reduce noise.

Optionally, the vehicle noise reduction apparatus is configured to: determine, based on the traveling speed of the vehicle, a plurality of vibration signals and a plurality of sound signals corresponding to the traveling speed; and
select, based on coherence results between the plurality of sound signals and the plurality of vibration signals, a target vibration signal corresponding to the traveling speed from the plurality of vibration signals, the coherence result representing a correlation between the vibration signal and the sound signal.

Optionally, the vehicle noise reduction apparatus is configured to: select, based on a plurality of coherence results between the plurality of sound signals and the plurality of vibration signals, a preset quantity of coherence results from the plurality of coherence results; and
select a vibration signal corresponding to the preset quantity of coherence results from the plurality of vibration signals as the target vibration signal.

Optionally, the vehicle noise reduction apparatus is configured to: sort the plurality of coherence results in a preset order based on magnitudes of the plurality of coherence results to acquire a coherence result sequence; and
select the preset quantity of coherence results based on the coherence result sequence.

Optionally, the vehicle noise reduction apparatus is configured to: obtain a group of coherence results corresponding to the vibration signal based on an autopower spectrum of the vibration signal, autopower spectrums corresponding to the plurality of sound signals, and a cross power spectrum between the vibration signal and each sound signal; and
acquire a corresponding plurality of groups of coherence results based on the plurality of vibration signals.

Optionally, the vehicle noise reduction apparatus is configured to determine a target vibration signal corresponding to the traveling speed based on the traveling speed of the vehicle and a preset relationship, the preset relationship being a correspondence between the traveling speed and a vibration signal.

Optionally, the vehicle noise reduction apparatus is configured to: determine, based on the traveling speed of the vehicle, a preset relationship corresponding to a speed range that the traveling speed of the vehicle falls in; and
determine the target vibration signal based on the traveling speed of the vehicle and the preset relationship.

Optionally, the vehicle noise reduction apparatus is configured to: determine, based on the traveling speed of the vehicle, a target vibration sensor corresponding to the traveling speed; and
use a vibration signal outputted by the target vibration sensor as the target vibration signal.

Optionally, the vehicle noise reduction apparatus is configured to: determine the speed range based on the traveling speed of the vehicle; and
determine the target vibration sensor based on the speed range.

Optionally, the vehicle noise reduction apparatus is configured to determine a noise reduction control signal based on the target vibration signal, the noise reduction control signal being configured for controlling the speaker to sound to reduce noise.

Optionally, the vehicle noise reduction apparatus is configured to: determine noise in the vehicle; and
increase, in a case that the noise in the vehicle is greater than a preset sound threshold, a quantity of the target vibration signals until the noise in the vehicle is less than or equal to the preset sound threshold.

The vehicle noise reduction apparatus may be a general-purpose processor, including a central processing unit (CPU for short), a network processor (NP for short), or the like. The vehicle noise reduction apparatus may also be a digital signal processor (DSP for short), an application specific integrated circuit (ASIC for short), a field-programmable gate array (FPGA for short) or another programmable logic device, a discrete gate or a transistor logic device, or a discrete hardware component.

In summary, in the examples of the present disclosure, the target vibration signal corresponding to the traveling speed is determined based on the traveling speed of the vehicle. In this way, the speaker may be controlled to sound based on the target vibration signal to reduce noise. The present disclosure may determine, based on a current traveling speed of the vehicle, a target vibration signal corresponding to the traveling speed, so that noise may be reduced based on the corresponding target vibration signal at different traveling speeds of the vehicle, thereby improving accuracy of noise reduction of the vehicle.

FIG. 8 is a schematic diagram of a vehicle noise reduction system according to an example of the present disclosure. As shown in FIG. 8, the system includes:
a vehicle noise reduction apparatus 801 and a speaker 802.

The vehicle noise reduction apparatus 801 acquires a noise reduction control signal based on the target vibration signal, and transmits the noise reduction control signal to the speaker 802.

The speaker 802 receives the noise reduction control signal to reduce noise.

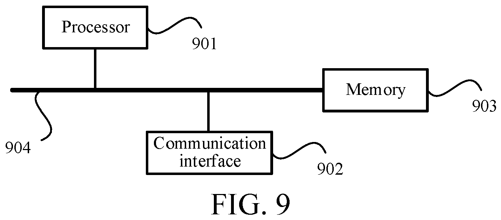

An example of the present disclosure further provides an electronic device. As shown in FIG. 9, the electronic device includes a processor 901, a communication interface 902, a memory 903, and a communication bus 904, where the processor 901, the communication interface 902, and the memory 903 communicate with each other by the communication bus 904.

The memory 903 is configured to store a computer program.

The processor 901 is configured to implement the following steps when executing the program stored in the memory 903: a target vibration signal corresponding to a traveling speed is determined based on the traveling speed of a vehicle, the target vibration signal being adapted for enabling a speaker to sound to reduce noise.

The processor 901 may alternatively implement another step in the foregoing vehicle noise reduction method. Details are not described herein again.

The communication bus mentioned in the foregoing electronic device may be a peripheral component interconnect (PCI for short) bus, an extended industry standard architecture (EISA for short) bus, or the like. The communication bus may be classified into an address bus, a data bus, a control bus, and the like. For ease of representation, only one bold line is used for description, but this does not represent that there is only one bus or only one type of bus.

The communication interface is configured for communication between the foregoing electronic device and another device.

The memory may include a random access memory (RAM for short), and may further include a non-volatile memory (RAM), for example, at least one magnetic disk storage. Optionally, the memory may further be at least one storage apparatus that is located far away from the processor.

The foregoing processor may be a general-purpose processor, including a central processing unit, a network processor, or the like. The foregoing processor may alternatively be a digital signal processor, an application-specific integrated circuit, a field-programmable gate array, or another programmable logic device, a discrete gate or a transistor logic device, or a discrete hardware component.

In yet another example of the present disclosure, a computer-readable storage medium is further provided. The computer-readable storage medium stores instructions, and when the instruction is run on a computer, the computer is caused to perform the vehicle noise reduction method described in the foregoing examples.

In yet another example of the present disclosure, a computer program product including instructions is further provided. When the computer program product is run on a computer, the computer is caused to perform the vehicle noise reduction method described in the foregoing examples.

In yet another example of the present disclosure, a vehicle including a vehicle noise reduction apparatus and/or a vehicle noise reduction system, and/or the foregoing electronic device is further provided.

All or a part of the foregoing examples may be implemented by software, hardware, firmware, or any combination thereof. When software is used to implement the examples, all or a part of the examples may be implemented in a form of a computer program product. The computer program product includes one or more computer instructions. When the computer program instructions are loaded and executed on a computer, the procedures or functions based on the examples of the present disclosure are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (SSD)), or the like.

It should be noted that, in this specification, relational terms such as first and second are merely used to distinguish one entity or operation from another entity or operation, but do not necessarily require or imply any such actual relationship or order between the entities or operations. Moreover, the terms "include," "comprise," or any variation thereof are intended to cover a non-exclusive inclusion. Therefore, a process, a method, an object, or a device that includes a series of elements not only include those elements, but also include other elements which are not clearly listed, or include the inherent elements of the process, method, object, or device. Without further limitations, elements defined by a phrase "including one ..." does not exclude that there are still other same elements in the process, method, object, or device.

Examples in this specification are all described in a related manner, mutual reference may be made to the same or similar part of the examples, and each example focuses on illustrating a difference from other examples. As for the examples of the apparatus, electronic device, computer-readable storage medium, and computer program product including instructions, since they are basically similar to a method example, and therefore is described briefly. For related parts, reference may be made to partial descriptions in the method example.

The foregoing descriptions are merely preferred examples of the present disclosure, are not intended to limit the protection scope of the present disclosure. Any modification, equivalent replacement, or improvement made without departing from the spirit and principle of the present disclosure shall fall within the protection scope of the present disclosure.

## Claims

1.  A vehicle noise reduction method, comprising:

    determining, based on a traveling speed of a vehicle, a target vibration signal corresponding to the traveling speed,
    the target vibration signal being adapted for enabling a speaker to sound to reduce noise.

2.  The method according to claim 1, the step of determining, based on the traveling speed of the vehicle, the target vibration signal corresponding to the traveling speed comprises:

    determining, based on the traveling speed of the vehicle, a plurality of vibration signals corresponding to the traveling speed and a plurality of sound signals corresponding to the traveling speed; and
    selecting, based on coherence results between the plurality of sound signals and the plurality of vibration signals, a target vibration signal corresponding to the traveling speed from the plurality of vibration signals, the coherence result representing a correlation between the vibration signal and the sound signal.

3.  The method according to claim 2, wherein the step of selecting, based on coherence results between the plurality of sound signals and the plurality of vibration signals, the target vibration signal corresponding to the traveling speed from the plurality of vibration signals comprises:

    selecting, based on a plurality of coherence results between the plurality of sound signals and the plurality of vibration signals, a preset quantity of coherence results from the plurality of coherence results; and
    selecting a vibration signal corresponding to the preset quantity of coherence results from the plurality of vibration signals as the target vibration signal.

4.  The method according to claim 3, wherein the step of selecting, based on the plurality of coherence results between the plurality of sound signals and the plurality of vibration signals, the preset quantity of coherence results from the plurality of coherence results comprises:

    sorting the plurality of coherence results in a preset order based on magnitudes of the plurality of coherence results to acquire a coherence result sequence; and
    selecting the preset quantity of coherence results based on the coherence result sequence.

5.  The method according to claim 2, wherein before the step of selecting, based on coherence results between the plurality of sound signals and the plurality of vibration signals, the target vibration signal corresponding to the traveling speed from the plurality of vibration signals, the method further comprises:

    obtaining a group of coherence results corresponding to the vibration signal based on an autopower spectrum of the vibration signal, autopower spectrums corresponding to the plurality of sound signals, and a cross power spectrum between the vibration signal and each sound signal; and
    acquiring a corresponding plurality of groups of coherence results based on the plurality of vibration signals.

6.  The method according to claim 1, wherein the step of determining, based on the traveling speed of the vehicle, the target vibration signal corresponding to the traveling speed comprises:
determining the target vibration signal corresponding to the traveling speed based on the traveling speed of the vehicle and a preset relationship, the preset relationship being a correspondence between the traveling speed and a vibration signal.

7. The method according to claim 6, wherein determining the target vibration signal corresponding to the traveling speed based on the traveling speed of the vehicle and the preset relationship further comprises:

determining, based on the traveling speed of the vehicle, a preset relationship corresponding to a speed range that the traveling speed of the vehicle falls in; and
determining the target vibration signal based on the traveling speed of the vehicle and the preset relationship.

8. The method according to claim 1, wherein the step of determining, based on the traveling speed of the vehicle, the target vibration signal corresponding to the traveling speed comprises:

determining, based on the traveling speed of the vehicle, a target vibration sensor corresponding to the traveling speed; and
using a vibration signal outputted by the target vibration sensor as the target vibration signal.

9. The method according to claim 8, wherein the step of determining, based on the traveling speed of the vehicle, the target vibration sensor corresponding to the traveling speed comprises:

determining a speed range based on the traveling speed of the vehicle; and
determining the target vibration sensor based on the speed range.

10. The method according to claim 1, wherein after the step of determining, based on the traveling speed of the vehicle, the target vibration signal corresponding to the traveling speed, the method further comprises:

determining a noise reduction control signal based on the target vibration signal, the noise reduction control signal being configured for controlling the speaker to sound to reduce noise, preferably wherein after the step of determining the noise reduction control signal based on the target vibration signal, the method further comprises:

determining noise in the vehicle; and
increasing, in a case that the noise in the vehicle is greater than a preset sound threshold, a quantity of the target vibration signals until the noise in the vehicle is less than or equal to the preset sound threshold.

11. A vehicle noise reduction apparatus, wherein
the vehicle noise reduction apparatus is configured to determine, based on a traveling speed of a vehicle, a target vibration signal corresponding to the traveling speed, the target vibration signal being adapted for enabling a speaker to sound to reduce noise.

12. A vehicle noise reduction system, comprising:

the vehicle noise reduction apparatus according to claim 11 and a speaker;
the vehicle noise reduction apparatus being configured to acquire a noise reduction control signal based on a target vibration signal, and transmit the noise reduction control signal to the speaker; and
the speaker being configured to receive the noise reduction control signal to reduce noise.

13. An electronic device, comprising: a processor and a memory,

the memory being configured to store a computer program; and
the processor being configured to implement steps of the vehicle noise reduction method according to any one of claims 1 to 10 when executing the program stored in the memory.

14. A computer-readable storage medium, storing a computer program, wherein the program, when executed by a processor, implements steps of the vehicle noise reduction method according to any of claims 1 to 10.

15. A vehicle, comprising the vehicle noise reduction apparatus according to claim 11, and/or the vehicle noise reduction system according to claim 12, and/or the electronic device according to claim 13.

Determine, based on a traveling speed of a vehicle, a target vibration signal corresponding to the traveling speed — 101

FIG. 1

Determine, based on a traveling speed of a vehicle, multiple vibration signals and multiple sound signals corresponding to the traveling speed — 2011

↓

Obtain a group of coherence results corresponding to the vibration signal based an autopower spectrum of the vibration signal, autopower spectrums corresponding to the multiple sound signals, and a cross power spectrum between the vibration signal and each sound signal — 2012

↓

Acquire corresponding multiple groups of coherence results based on the multiple vibration signals — 2013

↓

Sort the multiple coherence results in a preset order based on magnitudes of the multiple coherence results to acquire a coherence result sequence — 201411

↓

Select a preset quantity of coherence results based the coherence result sequence — 201412

↓

Select a vibration signal corresponding to the preset quantity of coherence results from the multiple vibration signals as the target vibration signal — 20142

Determine the target vibration signal corresponding to the traveling speed based the traveling speed of the vehicle and a preset relationship — 2015

Determine, based on the traveling speed of the vehicle, a target vibration sensor corresponding to the traveling speed — 2016

↓

Use a vibration signal outputted by the target vibration sensor as the target vibration signal — 2017

↓

Determine a noise reduction control signal based on the target vibration signal — 202

↓

Determine noise in the vehicle — 203

↓

Increase, in a case that the noise in the vehicle is greater than a preset sound threshold, a quantity of the target vibration signals until the noise in the vehicle is less than or equal the preset sound threshold — 204

FIG. 2

14

FIG. 3

FIG. 4

FIG. 5

FIG. 6

FIG. 7

FIG. 8

FIG. 9

## EUROPEAN SEARCH REPORT

**Application Number**

EP 25 16 0410

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/286505 A1 (SAKAMOTO KOSUKE [JP] ET AL) 25 September 2014 (2014-09-25) | 1,6,7, 10-15 | INV. G10K11/178 |
| Y | * claims 1, 2 * <br> * paragraph [0034] - paragraph [0036] * <br> * paragraph [0060] - paragraph [0063] * <br> * figures 1, 8A, 10B * | 2-5,8,9 | |
| | ----- | | |
| X | US 2020/074977 A1 (BERNSTEIN ERIC [US]) 5 March 2020 (2020-03-05) | 1,10-15 | |
| Y | * paragraph [0003] * <br> * paragraph [0048] * <br> * paragraph [0056] - paragraph [0057] * <br> * figure 1 * | 2-5,8,9 | |
| | ----- | | |
| X | US 5 758 311 A (TSUJI TAKAYUKI [JP] ET AL) 26 May 1998 (1998-05-26) | 1,10-15 | |
| Y | * paragraph [0026] * <br> * paragraph [0034] * <br> * paragraph [0108] * <br> * claims 1, 15 * | 2-5,8,9 | |
| | ----- | | TECHNICAL FIELDS SEARCHED (IPC) |
| X | US 2020/111471 A1 (JUNG IN SOO [KR] ET AL) 9 April 2020 (2020-04-09) | 1,6,7, 10-15 | G10K |
| Y | * claim 1 * <br> * column 6, line 31 - line 44 * <br> * column 7, line 32 - line 39 * <br> * figures 2, 4 * | 2-5,8,9 | |
| | ----- | | |
| X | US 2013/136270 A1 (SAKAMOTO KOSUKE [JP] ET AL) 30 May 2013 (2013-05-30) | 1,10-15 | |
| Y | * claim 1 * <br> * paragraph [0052] * <br> * paragraph [0073] * <br> * figure 3 * | 2-5,8,9 | |
| | ----- | | |
| | -/-- | | |

The present search report has been drawn up for all claims

| Place of search | Date of completion of the search | Examiner |
|---|---|---|
| The Hague | 29 July 2025 | Tympel, Jens |

Europäisches
Patentamt

European
Patent Office

Office européen
des brevets

# EUROPEAN SEARCH REPORT

**Application Number**

EP 25 16 0410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 115 482 803 A (UNIV WUHAN TECH) 16 December 2022 (2022-12-16) <br> * claim 1 * <br> * paragraph [0023] - paragraph [0025] * <br> * paragraph [0092] * <br> ----- | 2-5,8,9 | |
| Y | WO 2018/097946 A1 (HARMAN INT IND [US]) 31 May 2018 (2018-05-31) <br> * paragraph [0035] * <br> * paragraph [0040] * <br> * figure 3 * <br> ----- | 2-5,8,9 | |
| Y | US 2023/197052 A1 (CHO MUN HWAN [KR] ET AL) 22 June 2023 (2023-06-22) <br> * claim 1 * <br> * paragraph [0007] - paragraph [0009] * <br> ----- | 2-5,8,9 | |

**TECHNICAL FIELDS
SEARCHED      (IPC)**

The present search report has been drawn up for all claims

| Place of search | Date of completion of the search | Examiner |
|---|---|---|
| The Hague | 29 July 2025 | Tympel, Jens |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 0410

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2025

| Patent document cited in search report | | | Publication date | Patent family member(s) | | | Publication date |
|---|---|---|---|---|---|---|---|
| US | 2014286505 | A1 | 25-09-2014 | CN | 104064172 | A | 24-09-2014 |
| | | | | EP | 2782093 | A2 | 24-09-2014 |
| | | | | JP | 5822862 | B2 | 25-11-2015 |
| | | | | JP | 2014184737 | A | 02-10-2014 |
| | | | | US | 2014286505 | A1 | 25-09-2014 |
| US | 2020074977 | A1 | 05-03-2020 | EP | 3844742 | A1 | 07-07-2021 |
| | | | | US | 2020074977 | A1 | 05-03-2020 |
| | | | | WO | 2020047388 | A1 | 05-03-2020 |
| US | 5758311 | A | 26-05-1998 | JP | 2899205 | B2 | 02-06-1999 |
| | | | | JP | H07261774 | A | 13-10-1995 |
| | | | | US | 5758311 | A | 26-05-1998 |
| US | 2020111471 | A1 | 09-04-2020 | CN | 111002930 | A | 14-04-2020 |
| | | | | KR | 20200040070 | A | 17-04-2020 |
| | | | | US | 2020111471 | A1 | 09-04-2020 |
| US | 2013136270 | A1 | 30-05-2013 | CN | 103137122 | A | 05-06-2013 |
| | | | | EP | 2600341 | A2 | 05-06-2013 |
| | | | | JP | 5616313 | B2 | 29-10-2014 |
| | | | | JP | 2013112139 | A | 10-06-2013 |
| | | | | US | 2013136270 | A1 | 30-05-2013 |
| CN | 115482803 | A | 16-12-2022 | NONE | | | |
| WO | 2018097946 | A1 | 31-05-2018 | CN | 110024025 | A | 16-07-2019 |
| | | | | EP | 3545518 | A1 | 02-10-2019 |
| | | | | JP | 7008701 | B2 | 25-01-2022 |
| | | | | JP | 2020501178 | A | 16-01-2020 |
| | | | | KR | 20190087424 | A | 24-07-2019 |
| | | | | US | 9870763 | B1 | 16-01-2018 |
| | | | | WO | 2018097946 | A1 | 31-05-2018 |
| US | 2023197052 | A1 | 22-06-2023 | NONE | | | |

EPO FORM P0459

For more details about this annex : see Official Journal of the European Patent Office, No. 12/82